## Europäisches Patentamt
## European Patent Office
## Office européen des brevets

(19)

(11) Veröffentlichungsnummer: **0 069 857**
**B1**

(12) # EUROPÄISCHE PATENTSCHRIFT

(45) Veröffentlichungstag der Patentschrift:
**31.07.85**

(51) Int. Cl.⁴: **A 01 D 78/10,** A 01 D 80/00

(21) Anmeldenummer: **82104854.3**

(22) Anmeldetag: **03.06.82**

(54) Heuwerbungsmaschine zum Zetten und Schwaden von Erntegut.

(30) Priorität: **15.07.81 DE 3127908**

(43) Veröffentlichungstag der Anmeldung:
**19.01.83 Patentblatt 83/3**

(45) Bekanntmachung des Hinweises auf die Patenterteilung:
**31.07.85 Patentblatt 85/31**

(84) Benannte Vertragsstaaten:
**AT BE CH DE FR GB IT LI**

(56) Entgegenhaltungen:
**DE - A - 2 852 976**
**DE - U - 8 023 840**
**FR - A - 2 369 787**

(73) Patentinhaber: **Klöckner-Humboldt-Deutz AG**
**Zweigniederlassung Fahr, D-7702 Gottmadingen (DE)**

(72) Erfinder: **Wessel, Ulrich, Hilzingerstrasse 33,**
**D-7702 Gottmadingen (DE)**
Erfinder: **Scherer, Albrecht, Friedhofstrasse 17,**
**D-7702 Gottmadingen (DE)**

BUNDESDRUCKEREI BERLIN

## Beschreibung

Die Erfindung bezieht sich auf eine Heuwerbungsmaschine mit den Merkmalen des Oberbegriffs des Patentanspruchs 1.

Mit Heuwerbungsmaschinen, die sowohl mit gesteuerten als auch ungesteuerten Rechwerkzeugen arbeiten können, lassen sich praktisch sämtlich in der Heuwerbung vorkommende Arbeiten erledigen. Derartige Maschinen sind auch unter dem Begriff »Universal-Heuwerbungsmaschinen« bekanntgeworden.

In der DE-OS 28 52 976 ist eine Heuwerbungsmaschine zum Zetten und Schwaden gezeigt und beschrieben, die insbesondere über Mittel verfügt, die eine selbsttätige Lageanpassung der Rechradachsen der Rechräder beim Umstellen der Maschine von den einen auf den anderen Betriebsfall bewirken. Die Verbindung des Tragrahmens am Anschlußrahmen erfolgt über eine vertikal gerichtete Gelenkachse eines Zwischenteils sowie über eine waagrechte Gelenkachse, die durch die Befestigungsstellen zweier Laschen des Tragarmes am Zwischenteil führt.

Ferner ist der Tragrahmen über einen Verbindungsarm mit einer Platte des Anschlußrahmens über ein Kugelgelenk verbunden. Die beschriebene Anlenkung des Tragrahmens am Anschlußrahmen ermöglicht zwar eine selbsttätige Lageeinstellung der Rechradachsen bei der Umstellung der Maschine auf den einen oder anderen Betriebsfall, jedoch steht diesem Vorteil der Nachteil eines hohen baulichen Aufwandes entgegen.

Der vorliegenden Erfindung liegt die Aufgabe zugrunde, die Verbindung des Tragrahmens mit dem Anschlußrahmen einer Heuwerbungsmaschine der in Rede stehenden Gattung baulich wesentlich zu vereinfachen.

Die gestellte Aufgabe wird erfindungsgemäß durch die im kennzeichnenden Teil des Patentanspruchs 1 vorgeschlagenen Maßnahmen gelöst. Mit der vorgeschlagenen Lösung ist eine wesentliche Reduzierung des baulichen Aufwandes gegeben. Die Verbindung des Tragrahmens mit dem Anschlußrahmen erfolgt nämlich über eine einzige, räumlich derart angeordnete Schwenkachse, die ebenfalls eine selbsttätige Anpassung der Lagen der Rechradachsen an die Betriebsfälle »Zetten« oder »Schwaden« ermöglicht. Mit der erfindungsgemäßen Lehre technischen Handelns wird dem Fachmann ein entscheidender Hinweis gegeben, so daß er in der Lage ist, die genaue räumliche Lage der Achse im Einzelfall, je nach den äußeren Randbedingungen, — also auch bei konstruktiv voneinander abweichenden Heuwerbungsmaschinen — genau zu ermitteln. Die vorgeschlagene Lösung zeichnet sich insbesondere durch ihren äußerst geringen baulichen Aufwand aus.

Vorteilhafte bauliche Ausgestaltungen des Gegenstandes nach dem Hauptanspruch sind den Unteransprüchen 2 bis 4 zu entnehmen.

Weitere, für die Erfindung wesentliche Merkmale sowie die hieraus resultierenden Vorteile sind der nachfolgenden Beschreibung eines Ausführungsbeispiels der Erfindung anhand der Zeichnungen zu entnehmen. Es zeigt

Fig. 1 eine Heuwerbungsmaschine zum Zetten und Schwaden in ihrer Betriebsstellung »Schwaden«;

Fig. 2 die Heuwerbungsmaschine nach Fig. 1 in ihrer Betriebsstellung »Zetten«;

Fig. 3 die teilweise Rückansicht der Heuwerbungsmaschine nach Fig. 1;

Fig. 4 die Seitenansicht des Ausschnitts nach Fig. 3;

Fig. 5 die teilweise Rückansicht der Heuwerbungsmaschine nach Fig. 2 und

Fig. 6 einen Schnitt entlang der VI-VI in Fig. 5.

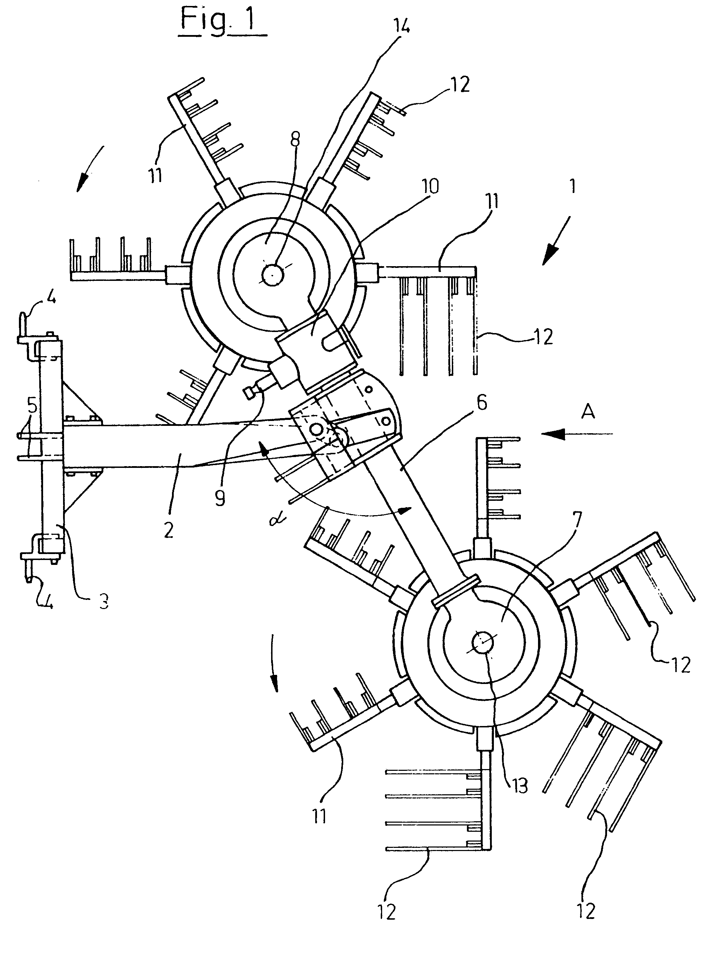

Bei der in Fig. 1 in schematischer Darstellung in Draufsicht niedergegebenen Heuwerbungsmaschine 1 handelt es sich um eine Maschine, mit der das Erntegut sowohl in Schwaden abgelegt als auch gezettet (nach rückwärts breit ausgestreut) werden kann.

Der vordere Teil eines Anschlußrahmens 2 ist mit einem Anbaubock 3 fest verbunden. Am Anbaubock 3 sind untere Befestigungspunkte 4 und ein oberer Befestigungspunkt 5 vorhanden, um die Heuwerbungsmaschine 1 an einen selbst nicht dargestellten Schlepper anschließen zu können.

An einem Tragrahmen 6 der Heuwerbungsmaschine 1 sind zwei Rechräder 7 und 8 gelagert. Der Antrieb der drehbaren Teile der Rechräder 7 und 8 erfolgt in herkömmlicher Weise über eine selbst nicht dargestellte Gelenkwelle, die mit einem Antriebswellenstummel 9 in Antriebsverbindung steht. Über ein Getriebe 10 werden die drehbaren Teile der Rechräder 7 und 8 mit Hilfe weiterer, im Tragrahmen 6 untergebrachter Getriebemittel angetrieben.

Die Rechräder 7 und 8 verfügen über eine Vielzahl von umlaufenden Zinkentragarmen 11, an deren freien Enden Rechwerkzeuge 12 befestigt sind.

Die Fig. 1 gibt die Heuwerbungsmaschine 1 in ihrer Betriebsstellung »Schwaden« wieder. Der Tragrahmen 6 ist gegenüber dem Anschlußrahmen 2 unter Bildung eines stumpfen Winkels $\alpha$ schräg angestellt. Bezogen auf die Fahrtrichtung »A« liegen die Rechradachsen 13 und 14 der Rechräder 7 und 8 seitlich versetzt zueinander.

Im Betriebsfall »Schwaden« stehen die Zinkentragarme 11 mit selbst nicht dargestellten Steuerkurven in Eingriff, dergestalt, daß das vom Rechrad 8 zur Mitte hin geführte Erntegut vom Rechrad 7 übernommen und in Form eines Seitenschwades abgelegt wird. Da die Rechwerkzeuge 12 über dem größten Bereich ihrer Umlaufbahnen parallel zur Bodenoberfläche geführt sein müssen, stehen die Rechradachsen 13 und 14 der Rechräder 7 und 8 etwa lotrecht zur Bodenoberfläche hin gerichtet.

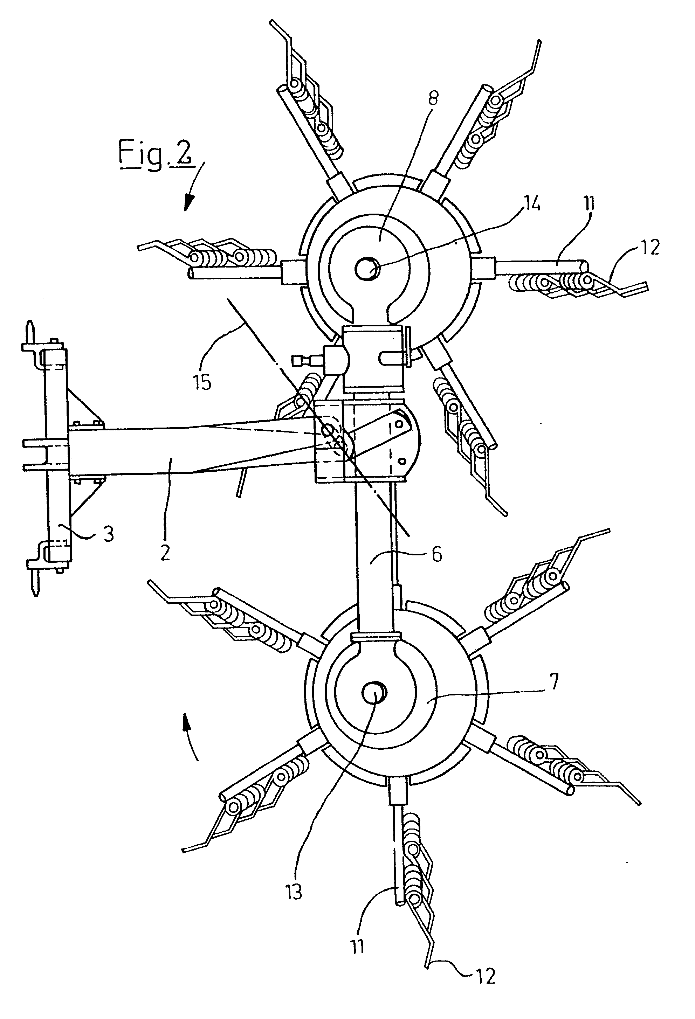

Fig. 2 gibt die Maschine in der Betriebsstellung »Zetten« wieder. Um diese Betriebsstellung zu erreichen, muß der in Fig. 1 schräg zur Fahrtrichtung A angestellte Tragrahmen 6 in eine etwa rechtwinklige Stellung zum Anschlußrahmen 2 überführt werden. Ferner werden die Zinkentragarme 11 außer Eingriff mit den Steuervorrichtungen der Rechräder 7 und 8 gebracht, so daß die Rechwerkzeuge 12 ungesteuert, d. h. in einer Ebene umlaufend angetrieben werden. Ferner überschneiden sich die Arbeitskreise der Rechwerkzeuge 12 der benachbarten Rechräder 7 und 8 in ihrem mittleren Bereich. Schließlich ist durch Drehrichtungsumkehr des Rechrades 7 gewährleistet, daß die Rechwerkzeuge 12 mit entgegengesetzt gerichteten Drehrichtungen umlaufen.

Zur Erzielung einer sauberen Zettarbeit ist es außerdem erforderlich, die Rechradachsen 13 und 14 der Rechräder 7 und 12 so einzustellen, daß sie nach vorne geneigt gerichtet sind (vergl. Fig. 6).

Ein erfindungswesentliches Merkmal der Heuwerbungsmaschine 1 besteht darin, daß der Tragarm 6 gegenüber dem Anschlußrahmen ausschließlich um eine einzige, räumlich schräg liegende Achse 15 schwenkbar ist. Die im Einzelfall einzuhaltenden Neigungswinkel der Achse 15 lassen sich von den gegebenen Randbedingungen ableiten. Wesentlich ist, daß die Rechradachsen 13 und 14 im Betriebsfall »Schwaden« etwa lotrecht zur Bodenoberfläche gerichtet sind, während sie nach dem Umstellen der Heuwerbungsmaschine 1 auf den Betriebsfall »Zetten« nach vorne geneigt verlaufen müssen.

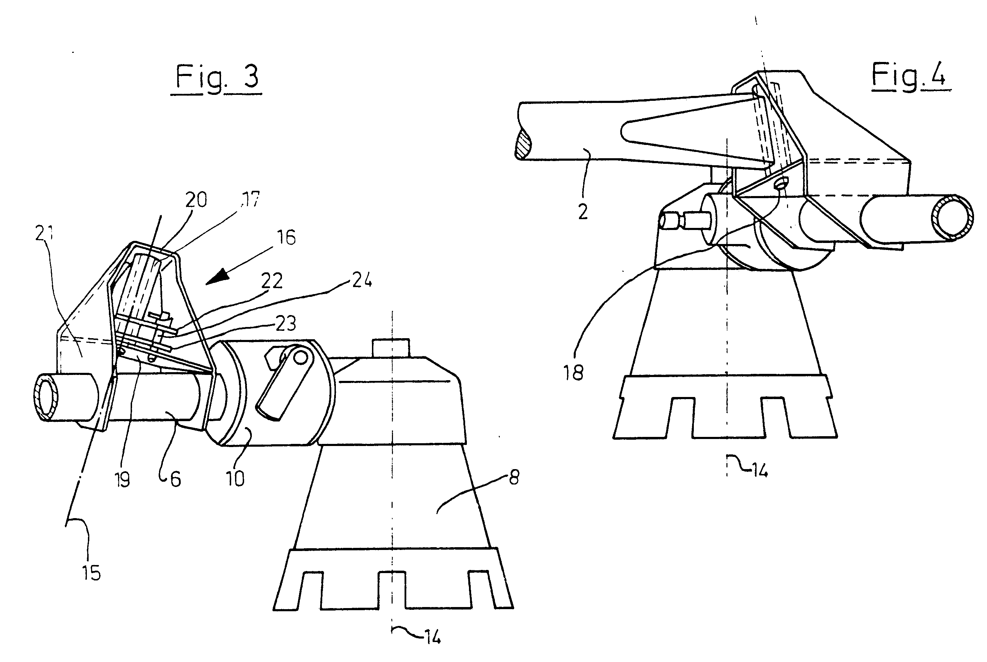

Die Fig. 3 und 4 geben Teile der Heuwerbungsmaschine 1 in ihrer Betriebsstellung »Schwaden« wider, um insbesondere die Lage der Achse 15, sowie konstruktive Einzelheiten der Schwenkverbindung 16 zwischen dem Tragrahmen 6 und dem Anschlußrahmen 2 zu erläutern. Das in Fig. 1 rechts liegende Rechrad 8 ist unvollständig dargestellt. Am rückwärtigen Ende des Anschlußrahmens 2 ist eine Hülse 17 z. B. durch Schweißen festgelegt. Die Hülse 17 wird von einem Schwenkbolzen 18 durchsetzt, der in einem unteren Wandungsteil 19 und einem oberen Wandungsteil 20 befestigt ist. Die Wandungsteile 19 und 20 sind Bestandteil eines etwa rechteck-förmigen Rahmens 21, der mit dem Tragarm 6 fest verbunden ist.

An der Hülse 17 sind zwei Laschen 22 und 23 befestigt, die einen vorzugsweise federbelasteten Steckbolzen 24 aufnehmen. Mit Hilfe dieses Steckbolzens 24 kann der Tragrahmen 6 gegenüber dem Anschlußrahmen 2 in zwei Schwenkstellungen festgelegt werden. Diese Stellungen sind in Fig. 1 und in Fig. 2 wiedergegeben. Sowohl aus Fig. 3 als auch aus Fig. 4 ist ersichtlich, daß die Rechradachse 14 etwa vertikal gerichtet verläuft.

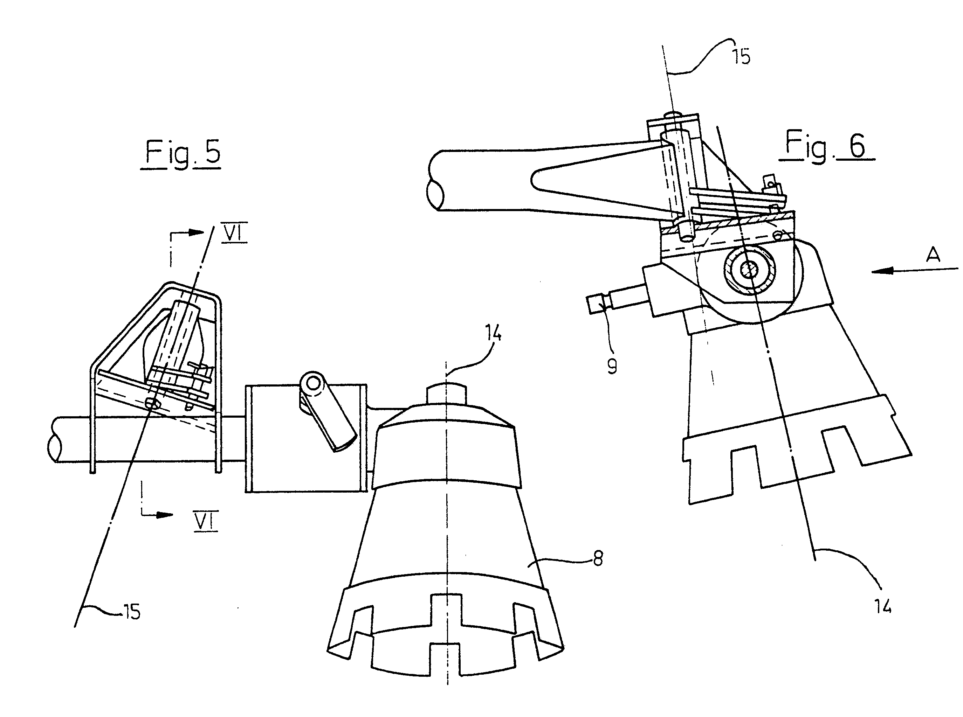

Die Darstellung nach den Fig. 5 und 6 entsprechen prinzipiell denjenigen nach den Fig. 3 und 4, lediglich mit dem Unterschied, daß der Tragrahmen 6 in bezug auf den Anschlußrahmen 2 in seine dem Betriebsfall »Zetten« der Heuwerbungsmaschine 1 entsprechenden Lage überführt wurde. Ersichtlich ist insbesondere aus Fig. 6, daß die Rechradachse 14 des Rechrades 8 vorne hin, bezogen auf die Fahrtrichtung »A«, geneigt verläuft. Wesentlich ist, daß sich das Maß dieser Neigung beim Verschwenken des Tragrahmens 6 aus der in Fig. 1 gezeigten Lage in die der Fig. 2 entsprechenden Position von selbst einstellt. Natürlich sind hierbei die Eingriffsverhältnisse der Rechwerkzeuge 12 zur Bodenoberfläche hin berücksichtigt.

In Fig. 3 bis 6 wurde auf die zeichnerische Darstellung der Zinkentragarme 11 und der daran befestigten Rechwerkzeuge 12 verzichtet, da deren konstruktive Gestaltung in mannigfacher Weise getroffen werden kann. Der Fachmann ist, unter Berücksichtigung der einzuhaltenden Randbedingungen, ohne weiteres in der Lage, die exakte räumliche Lage der Achse 15 auch bei unterschiedlichen konstruktiven Ausbildungen und Abmessungen von Heuwerbungsmaschinen der in Rede stehenden Art aufzufinden.

## Patentansprüche

1. Heuwerbungsmaschine (1) zum Zetten und Schwaden von Erntegut mit mindestens zwei, an einem Tragrahmen (6) gelagerten Rechrädern (7, 8), deren Rechradachsen (13, 14) in der Zettstellung der Heuwerbungsmaschine (1) in bezug auf die Fahrtrichtung nach vorne geneigt verlaufen und deren Rechradachsen (13, 14) in der Schwadstellung der Heuwerbungsmaschine (1) etwa lotrecht zur Bodenoberfläche hin gerichtet sowie in Fahrtrichtung seitlich versetzt liegend zueinander angeordnet sind, wobei der Tragrahmen (6) an einem Anschlußrahmen (2) derart angelenkt ist, daß sich die für das Zetten und Schwaden erforderliche Lage der Rechradachsen (13, 14) der Rechräder (7, 8) beim Überführen des Tragrahmens (6) in eine diesen Betriebsfällen entsprechende Lage selbsttätig einstellt, dadurch gekennzeichnet, daß der Tragrahmen (6) ausschließlich um eine einzige, räumlich schräg liegende Achse (15) gegenüber dem Anschlußrahmen (2) schwenkbar ist.

2. Heuwerbungsmaschine nach Anspruch 1, dadurch gekennzeichnet, daß zum Anschluß des Tragrahmens (2) am Anschlußrahmen (6) eine Schwenkverbindung (16) vorgesehen ist, bei der innerhalb eines mit dem Anschlußrahmen (6) fest verbundenen Rahmens (21) ein Schwenkbolzen (18) gelagert ist, der von einer am Tragrahmen (2) festgelegten Hülse (17) umschlossen wird.

3. Heuwerbungsmaschine nach Anspruch 2 dadurch gekennzeichnet, daß die Hülse (17) einen federbelasteten Steckbolzen (24) trägt, mit dem der Tragrahmen (6) gegenüber dem Anschlußrahmen (2) in zwei Schwenkstellungen festlegbar ist.

4. Heuwerbungsmaschine nach Anspruch 2, dadurch gekennzeichnet, daß der Rahmen (21) zueinander parallel verlaufende und mit der Achse (15) rechte Winkel einschließende Wandungsteile (19, 20) aufweist.

## Claims

1. Haymaking machine (1) for tedding and swathing harvest material, including at least two raking wheels (7, 8) mounted on a supporting frame (6), the raking wheel axles (13, 14) of said machine sloping forwardly with respect to the direction of travel when the haymaking machine (1) is in its tedding disposition, and the raking wheel axles (13, 14) of said machine are orientated substantially perpendicularly to the surface of the ground when the haymaking machine (1) is in its swathing disposition and are laterally offset from each other in the direction of travel, the supporting frame (6) being pivotally connected to a connecting frame (2) in such a manner that the position of the axles (13, 14) of the raking wheels (7, 8), as required for tedding and swathing purposes, is automatically set when the supporting frame (6) is transferred into a position corresponding to such operational states, characterised in that the supporting frame (6) is exclusively pivotable about a single axis (15), which is inclinedly orientated with respect to the connecting frame (2).

2. Haymaking machine according to claim 1 characterised in that a pivotal connection (16) is provided for connecting the supporting frame (2) to the connecting frame (6), whereby a pivot pin (18) is mounted within a frame (21) which is securely connected to the connecting frame (6), said pin being surrounded by a sleeve (17) secured to the supporting frame (2).

3. Haymaking machine as claimed in claim 2, characterised in that the sleeve (17) supports a spring-loaded insert pin (24) which permits the supporting frame (6) to be secured in two pivotal positions with respect to the connecting frame (2).

4. Haymaking machine as claimed in claim 2, characterised in that the frame (21) has wall sections (19, 20) which extend parallel to each other and subtend right angles with the axis (15).

## Revendications

1. Machine pour la fenaison (1) pour l'épandage et la mise en endainsde la récolte avec au moins deux roues de ratissage (7, 8) logées sur un cadre porteur (6), dont les essieux (13, 14), en position d'épandage de la machine pour la fenaison (1) sont inclinés vers l'avant par rapport à la direction d'avance et dont les essieux (13, 14) en position de mise en endains de la machine pour la fenaison (1) sont dirigés à peu près perpendiculairement à la surface du sol en étant disposés latéralement décalés en direction d'avance, et en outre le cadre porteur (6) est articulé sur un cadre de raccordement (2) de façon que la position des essieux (13, 14) des roues de ratissage (7, 8) nécessaire pour l'épandage et la mise en endains s'établisse d'elle -même par disposition du cadre porteur (6) à une position correspondant à l'un de ces cas d'utilisation, caractérisée en ce que le cadre porteur (6) est pivotant exclusivement autour d'un seul axe oblique (15) par rapport au cadre de raccordement (2).

2. Machine pour la fenaison selon la revendication 1 caractérisée en ce que pour connecter le cadre porteur (2) au cadre de raccordement (6), une jonction pivotante (16) est prévue, dans laquelle un pivot (18) est logé à l'intérieur d'un cadre (21) relié solidement au cadre de raccordement (6), lequel pivot est entouré d'un manchon (17) fixé sur le cadre porteur (2).

3. Machine pour la fenaison selon la revendication 2 caractérisée en ce que le manchon (17) porte un axe débrochable (24) chargé par ressort, par lequel le cadre porteur (6) peut être disposé, par rapport au cadre de raccordement (2), à deux positions.

4. Machine pour la fenaison selon la revendication 2 caractérisée en ce que le cadre (21) présente deux parties de paroi (19, 20) parallèles l'une à l'autre et formant un angle droit avec l'axe (15).

# Fig. 1

Fig.2

Fig.4

Fig. 3

Fig. 5

Fig. 6

0 069 857